# EUROPEAN PATENT APPLICATION

(11) **EP 0 849 621 A2**
(43) Date of publication of application: **24.06.1998**
(21) Application number: 97309847.8
(22) Date of filing: 08.12.1997
(51) Int. Cl.: G02F 1/1339

(54) **Spacerless apertures for active matrix liquid crystal display projection light valves**

(30) Priority: 17.12.1996 US 767652; 17.12.1996 US 767906
(71) Applicant: XEROX CORPORATION, Rochester, New York 14644 (US)
(72) Inventor: Crawford, Gregory P., Providence, Rhode Island 02906 (US); Gossain, Vineet, Stanford, California 94309 (US); Lewis, Alan G., Sunnyvale, California 94087 (US)
(74) Representative: Pike, Christopher Gerard

(57) **Abstract**

A display cell, and process for making same, wherein a rear substrate (12) with a front side and a rear side is divided into active aperture areas (34) and a non-active areas (36). A spacing layer is disposed on the front side of the rear (12) substrate and is comprised of an affixing layer (38) and spacing elements (20), and the affixing layer (38) covers at least a portion of the non-active areas (36) but remains substantially outside of the active aperture areas (34). The spacing elements (20) are attached to the affixing layer (38). A front substrate (14) is affixed to the front side of the rear substrate (12) but remains substantially uniformly separated from the rear substrate (12) by the spacing layer.

## Description

This invention relates generally to displays and more particularly concerns an active matrix liquid crystal display cell in which the spacers for maintaining a uniform cell gap within the liquid crystal display cell are not placed outside the active area of the apertures. Active matrix liquid crystal display (AMLCD) light valves have a variety of uses including being used as an image source in either a rear or front projection system. The AMLCD is constructed using a rear glass layer with addressing elements and pixel ITO electrodes, a liquid crystal layer, and a front glass layer with opposing ITO electrode. It is important that the cell gap spacing between the front and rear glass layers remain uniform for consistent light propagation through the AMLCD.

There are several conventional ways to assemble the AMLCD and achieve uniform cell gap spacings within desired tolerance levels.

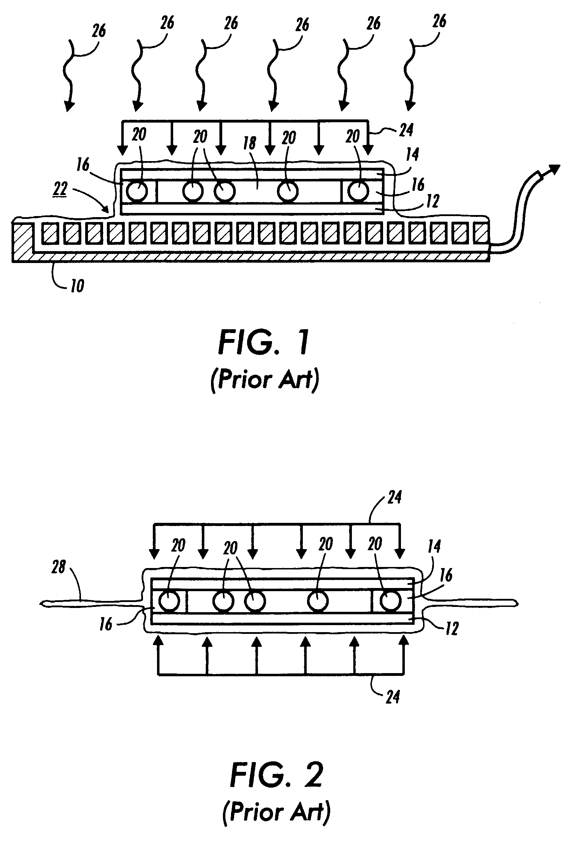

Figure 1 shows a cross-sectional view of a prior art technique of assembling a liquid crystal display cell. In this method a vacuum chuck 10 is used to evacuate air under the bottom substrate 12 and thin plastic sheet 22 which causes air outside of the thin plastic sheet 22 to assert a pressing force 24 upon a liquid crystal display cell comprised of a bottom substrate 12, a top substrate 14, an epoxy seal 16, liquid crystal material 18, and many randomly placed spacers 20. The spacers 20 are typically spherical glass or plastic beads and are randomly placed on the bottom substrate 12 using techniques such as a dry cloud method or a solvent dispersed method. Additionally, some spacers 20 are placed in the epoxy seal 16. Then a UV light 26 is used to cure the epoxy seal 16 while the pressing force 24 pushes the bottom substrate 12 and the top substrate 14 together with a separation determined by the spacers 20. This is known as the vacuum chuck or vacuum press method.

Figure 2 shows a cross-sectional view of a second prior art technique of a method of assembling a liquid crystal display cell which is very similar to the vacuum chuck or vacuum press method described above. The liquid crystal display cell is still comprised of a bottom substrate 12, a top substrate 14, an epoxy seal 16, liquid crystal material 18, and many randomly placed spacers 20. However, in this method the vacuum chuck 10 and thin plastic sheet 22 are replaced with a vacuumed sealed plastic bag 28 to exert the pressing force 24 on the liquid crystal display cell. In this case the epoxy seal 16 may be cured using either UV light or heat depending on the type of epoxy seal 16 used. This method is known as the vacuum sealed plastic bag method.

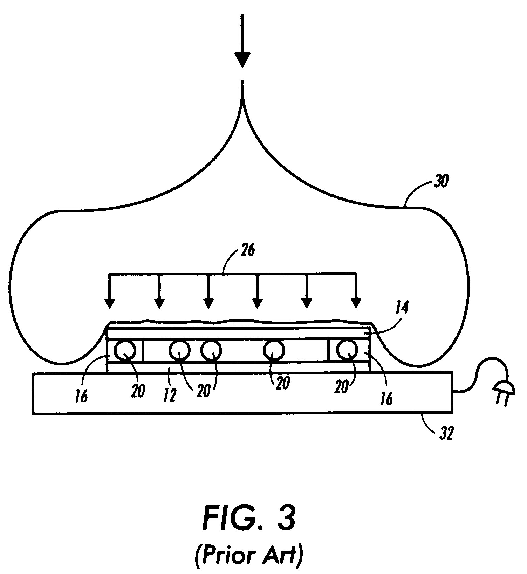

Figure 3 shows a cross-sectional view of a third prior art technique of a method of assembling a liquid crystal display cell. Again, the liquid crystal display cell is comprised of a bottom substrate 12, a top substrate 14, an epoxy seal 16, liquid crystal material 18, and many randomly placed spacers 20. In this method the vacuum chuck 10 and the thin plastic sheet 22 are replaced with a balloon 30 and a hot plate 32 to push the top substrate 14 and bottom substrate 12 together and cure the epoxy seal 16. The epoxy seal 16 is therefore a thermally cured epoxy. If it is desired to use a UV light cured epoxy, then the hot plate 32 must be replaced with glass and the liquid crystal display cell may be back irradiated with UV light. This is known as the balloon method.

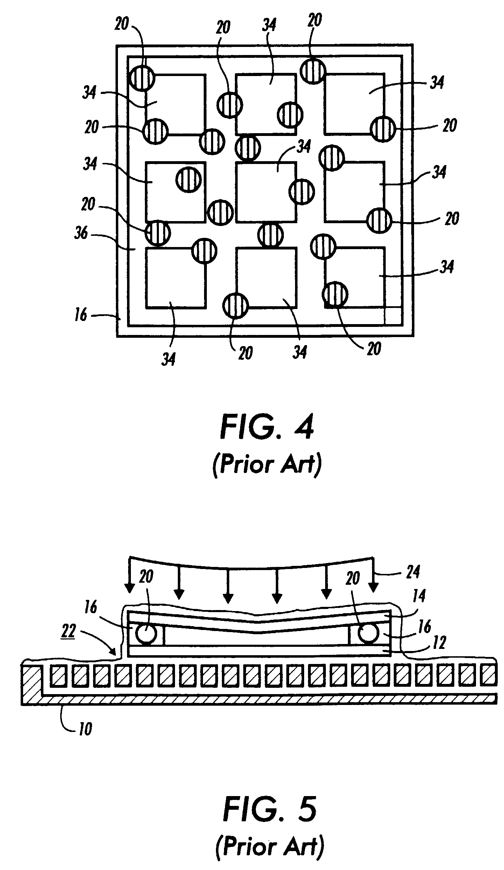

Figure 4 shows a top view of a liquid crystal display cell assembled by either the vacuum chuck method, the vacuum sealed plastic bag method, or the balloon method. A nine pixel arrangement is shown for illustrative purposes only; the actual number of pixels will be much greater. The liquid crystal display cell is divided into active aperture areas 34 and non-active areas 36 with spacers 20 randomly distributed throughout both the active aperture areas 34 and the non-active areas 36. The active aperture areas 34 are transparent with light transmission controlled by electronic signals while the non-active areas 36 are opaque.

The above described methods have been used to produce liquid crystal display cells with uniform cell thicknesses having acceptable tolerances; however, problems occur as the size of the active aperture areas 34 shrink. In some applications, such as projection displays the dimensions of the active aperture areas 34 are of the same order of magnitude as the dimensions of the spacers 20. The impact of the shrinking active aperture areas 34 dimensions is when the spacers 20 overlap or rest on the active aperture areas 34 it occupies a larger portion of the active aperture areas 34. For a typical light valve, the spacers 20 can occupy approximately 20% of the active aperture areas 34 which significantly disrupts the performance of the liquid crystal display cell and degrades the resultant image. Additionally, the spacers 20 disturb the alignment of the liquid crystal molecules around the spacers 20 which further degrades the resultant image. In particular, the spacers disrupt images because they are visible as bright spots on a dark background.

One method to correct for the above problems is to remove the randomly placed spacers 20 leaving only the spacers 20 in the epoxy seal 16 at the perimeter; however, it is not feasible, for displays of approximately an inch or larger, to merely remove the randomly placed spacers 20 leaving only the spacers 20 in the epoxy seal 16 as shown in Figure 5. The pressing force 24 results in a bend in the top substrate 14 which distorts the entire liquid crystal display cell and results in unacceptable image quality.

Other display technologies may also benefit from this invention. For instance, field emitting displays or FED's also require selective spacer deposition to maintain a uniform gap spacing between glass plates under a high vacuum. The techniques described here can also be used in the construction of an FED.

Accordingly, is the primary aim of the invention to fabricate a display cell where the top substrate 14 and the bottom substrate 12 remain uniformly spaced from each other but the problem of overlap between the spacers 20 and the active aperture areas 34 of the cell is minimized or eliminated to improve the optical performance in terms of contrast and transmission of the display cell.

In accordance with one aspect of the present invention, there is provided a display cell comprising: a) two substrates with at least one of said substrates divided into active aperture areas and non-active areas; b) a spacing layer, interposed between said two substrates, comprised of an affixing layer and spacing elements, wherein the affixing layer covers at least a portion of the non-active areas and remains substantially outside of the active aperture areas, and the spacing elements are attached to the affixing layer and protrude therefrom; and c) said two substrates being affixed to each other but remaining substantially uniformly separated from each other by said spacing elements.

There is also provided a process of forming a display cell comprising: a) providing a first substrate which has been partitioned in active areas and inactive areas and has a front surface and a rear surface; b) forming an affixing layer on the front surface of said first substrate; c) randomly attaching spacing elements to said affixing layer; d) removing said affixing layer and said spacing elements attached to said affixing layer from substantially all of said active areas; and e) attaching a second substrate to said first substrate on the front surface, said second substrate being kept at a substantially uniform distance from said first substrate by said spacing elements.

Figure 1 shows a cross-sectional view of a prior art technique of a method of assembling a liquid crystal display cell.

Figure 2 shows a cross-sectional view of a second prior art technique of a method of assembling a liquid crystal display cell.

Figure 3 shows a cross-sectional view of a third prior art technique of a method of assembling a liquid crystal display cell.

Figure 4 shows a top view of a liquid crystal display cell assembled by any of the methods shown in Figures 1-3.

Figure 5 shows a cross-sectional view of an alternative prior art technique of assembling a liquid crystal display cell to the technique shown in Figure 1.

Figure 6 shows a top view of a first step in a process to make a liquid crystal display cell.

Figure 7 shows a top view of a second step in a process to make a liquid crystal display cell.

Figure 8 shows a side view of a third step in a process to make a liquid crystal display cell.

Figure 9 shows a top view of a liquid crystal display cell made using the process steps shown in Figures 6 through 8.

Figure 10 shows a top view of a first step in an alternate process to make a liquid crystal display cell.

Figure 11 shows a top view of a second step in an alternate process to make a liquid crystal display cell.

Figure 12 shows a side view of a third step in an alternate process to make a liquid crystal display cell.

Figure 13 shows a top view of a liquid crystal display cell made using the process steps shown in Figures 10 through 12.

Figure 14 shows a top view of a first step in a second alternate process to make a liquid crystal display cell.

Figure 15 shows a top view of a second step in a second alternate process to make a liquid crystal display cell.

Figure 16 shows a side view of a third step in a second alternate process to make a liquid crystal display cell.

Figure 17 shows a top view of a liquid crystal display cell made using the process steps shown in Figures 14 through 16.

Figure 18 shows a top view of a first step in a process to make a liquid crystal display cell.

Figure 19 shows a top view of a second step in a process to make a liquid crystal display cell.

Figure 20 shows a side view of a third step in a process to make a liquid crystal display cell.

Figure 21 shows a top view of a fourth step in a process to make a liquid crystal display cell.

Figure 22 shows a top view of a liquid crystal display cell made using the process steps shown in Figures 18 through 21.

Figure 23 shows a top view of a first step in a process to make a liquid crystal display cell.

Figure 24 shows a top view of a second step in a process to make a liquid crystal display cell.

Figure 25 shows a side view of a third step in a process to make a liquid crystal display cell.

Figure 26 shows a top view of a fourth step in a process to make a liquid crystal display cell.

Figure 27 shows a top view of a liquid crystal display cell made using the process steps shown in Figures 22 through 26.

While the present invention will be described in connection with a preferred embodiment and method of use, it will be understood that it is not intended to limit the invention to that embodiment or procedure.

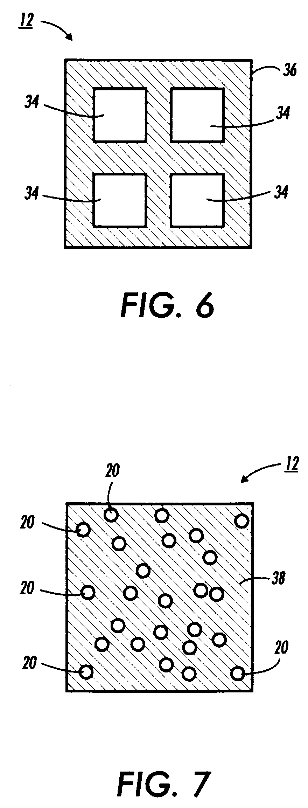

Turning now to Figure 6, a bottom substrate 12 of a liquid crystal display cell is shown. A four pixel arrangement is shown for illustrative purposes only; however, the actual number of pixels will be much greater. A liquid crystal display cell is shown for descriptive purposes; however, this spacing technique is not limited to the assembly of liquid crystal display cells but is applicable to the assembly of any display cell which has a bottom substrate 12 and a top substrate 14 which must remain closely but uniformly spaced apart such as field emitting displays or FED's.

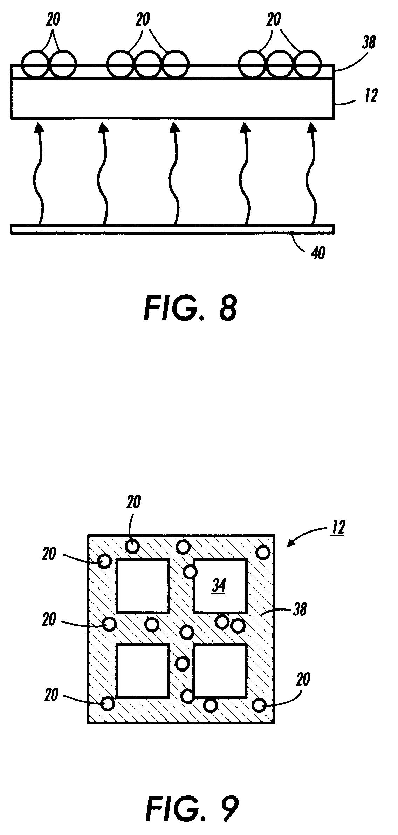

The bottom substrate 12 has active aperture areas 34 and non-active areas 36. The non-active areas 36 are opaque and do not transmit light in the UV range. The bottom substrate 12 is then coated with a thin coating 38 of positive photoresist or positive UV curable polyimide as shown in Figures 7 and 8. The thickness of the thin coating 38 should be less than the diameter of the spacers 20 and preferably in the range of approximately 0.05 micrometers to 1 micrometer with best results obtained with a thickness of approximately 0.2 micrometers. If the thin coating 38 gets too thick it will cause filling problems and disturb the liquid crystal profile. The spacers 20 are then randomly dispersed on the thin coating 38 using such methods as a dry cloud method or a wet solvent method as is shown in Figures 7 and 8. The dry cloud method, as is known in the art, uses the release of compressed air or nitrogen to create a cloud of spacers. After the release of compressed air or nitrogen is turned off, the airborne spacers are allowed to settle on the substrate.

The wet solvent method, another well known method for dispersing spacers, uses a mixture of spacers that have been dispersed in a solvent at very low concentrations. The solvent and dispersed spacers are then sprayed onto the substrate using a pressured gun, similar to a compressed air paint sprayer. Once the solvent and spacers have been sprayed onto the substrate the solvent then evaporates leaving behind the spacers. At this point, the thin coating 38 with the randomly dispersed spacers 20 must be set to prevent the spacers 20 from being easily separated from the thin coating 38 during subsequent handling and process steps using a process such as a soft-temperature bake.

A typical soft baking procedure is to bake the substrate at a temperature of 80 degrees C for approximately 5 minutes. The actual baking time will depend on the type of photoresist used. The thickness of the thin coating 38 is also important to insure that the spacers 20 are rigidly secured to the bottom substrate 12.

The spacers 20 are typically small glass or plastic spheres with a diameter of 4-5 micrometers and a tolerance of ±0.25 micrometers; however, other shapes and materials may be used. Alternative materials include plastics and ceramics so long as the material is compatible with the heat requirements in a subsequent high temperature bake. Alternative shapes include polyhedral shapes where the difference in diameter measured from flat face to flat face and measured from vertice to vertice fall within acceptable tolerances or any shape, uniform or non-uniform so long as it is capable of maintaining a uniform distance within tolerance levels.

At this stage the bottom substrate 12 with the thin coating 38 and the spacers 20 should be back illuminated with UV light source 40 to allow the thin coating 38 holding the spacers 20 to interact with the UV light. As shown in Figure 6 only the active aperture areas 34 will transmit the UV light source 40; therefore, when the bottom substrate 12 with the thin coating 38 and the spacers 20 are back illuminated with the UV light source 40 only those portions of the thin coating 38 will be exposed. As the thin coating 38 is a positive photoresist or positive UV curable polyimide, the portions of the thin coating 38 that are exposed can easily be removed during a development step. Both positive photoresists and positive UV curable polyimides and their developing solutions are well known in the art and include the AZ XXXX product series from Hoechst Celanese which includes the AZ 1512 product.

The development step generally consists of immersion into a bath which removes the portions of the thin coating 38 which were cured by irradiating them with the UV light source 40. After development of the bottom substrate 12 with the thin coating 38 and spacers 20, the bottom substrate 12 will appear as shown in Figure 9. Notice that the portions of the thin coating 38, and those spacers 20 adhered to them, that were irradiated with the UV light source 40 and which were covering the active aperture areas 34 have been removed leaving the portions of the thin coating 38 and the spacers 20 which are adhered to them which were not irradiated with the UV light source 40 and cover the non-active areas 36.

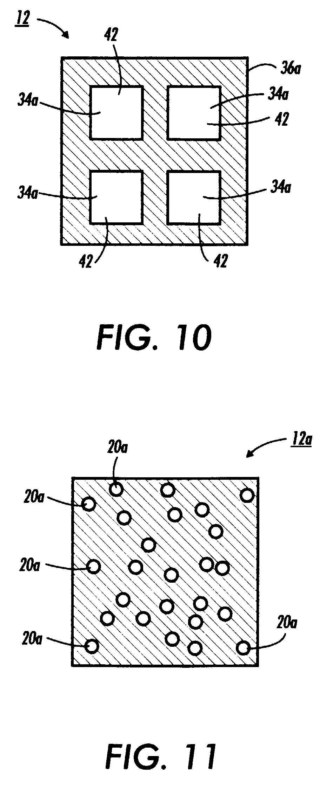

At this point a polyimide alignment layer can be spin coated, cured, and rubbed as is known in the art, leaving the bottom substrate 12 ready for assembly into a liquid crystal display cell using any of the previously described methods. Normally the polyimide alignment layer is applied to the bottom substrate 12 prior to spacer attachment. However, in this process sequence the polyimide alignment layer is applied to the bottom substrate 12 after spacer attachment to avoid any possibility of degradation of the polyimide alignment layer during the development step when the portions of the thin coating 38 were removed from the active aperture areas 34. However, with appropriate compatibility of development solutions for the thin coating 38 and the polyimide alignment layer, the polyimide alignment layer may be applied to the bottom substrate 12 prior to spacer attachment as shown in Figures 10 through 13.

Figures 10 through 13 which show an alternate process and reference numerals with the extension "a" will be used to show elements which are identical to the elements shown in Figures 6 through 9.

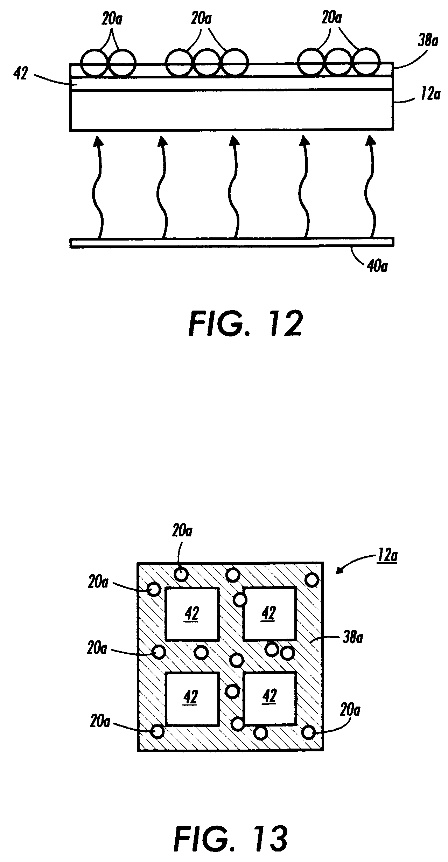

Turning now to Figure 10 a bottom substrate 12a of a liquid crystal display cell is shown. A four pixel arrangement is shown for illustrative purposes only; however, the actual number of pixels will be much greater. The bottom substrate 12a has active aperture areas 34a covered with a polyimide alignment layer 42a which allows for the transmission of UV light and non-active areas 36a. The non-active areas 36a are opaque and do not transmit light in the UV range. The bottom substrate 12a is then coated with a thin coating 38a of positive photoresist or positive UV curable polyimide as shown in Figures 11 and 12. The thickness of the thin coating 38a should be less than the diameter of the spacers 20a and preferably in the range of approximately 0.05 micrometers to 1 micrometer with best results obtained with a thickness of approximately 0.2 micrometers. If the thin coating 38a gets too thick it will cause filling problems and disturb the liquid crystal profile. The spacers 20a are then randomly dispersed on the thin coating 38a using a process such as the dry cloud method as is shown in Figures 11 and 12. At this point, the thin coating 38a with the randomly dispersed spacers 20a should be set to prevent the spacers 20a from being easily separated from the thin coating 38a during subsequent handling and process steps using a process such as soft temperature baking. The thickness of the thin coating 38a is also important to insure that the spacers 20a are rigidly secured to the bottom substrate 12a.

At this stage the bottom substrate 12a with the polyimide alignment layer 42a, the thin coating 38a and the spacers 20a should be back illuminated with UV light source 40a to cure the thin coating 38a holding the spacers 20a. As shown in Figure 10 only the active aperture areas 34a covered with the UV transmissive polyimide alignment layer 42 will transmit the UV light source 40a, therefore when the bottom substrate 12a with the thin coating 38a and the spacers 20a are back illuminated with the UV light source 40a only those portions of the thin coating 38a will be exposed. As the thin coating 38a is a positive photoresist or positive UV curable polyimide, the portions of the thin coating 38a can easily be removed during a development step. The development step generally consists of immersion into a bath which removes the portions of the thin coating 38a which were exposed by irradiating them with the UV light source 40a. After development of the bottom substrate 12a with the thin coating 38a and spacers 20a, the bottom substrate 12a will appear as shown in Figure 13. Notice that the portions of the thin coating 38a, and those spacers 20a adhered to them, that were irradiated with the UV light source 40a and which were covering the active aperture areas 34a have been removed leaving the portions of the thin coating 38a and the spacers 20a which are adhered to them which were not irradiated with the UV light source 40a and cover the non-active areas 36a. At this point the bottom substrate 12a with the polyimide alignment layer 42a, thin coating 38a, and the spacers 20a can be cleaned and is ready for final assembly into a liquid crystal display cell using any of the previously described methods.

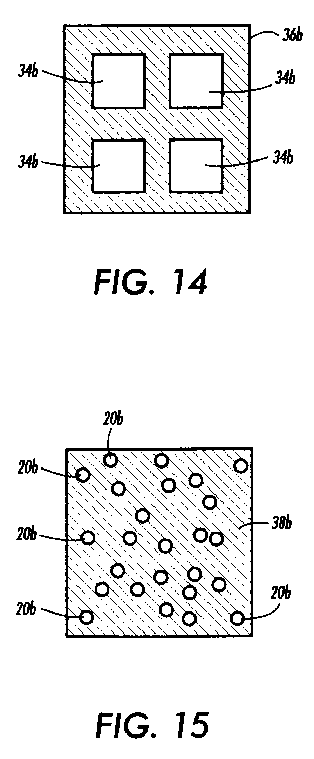

Figures 14 through 17 which show an alternate process and reference numerals with the extension "b" will be used to show elements which are identical to the elements shown in Figures 6 through 9.

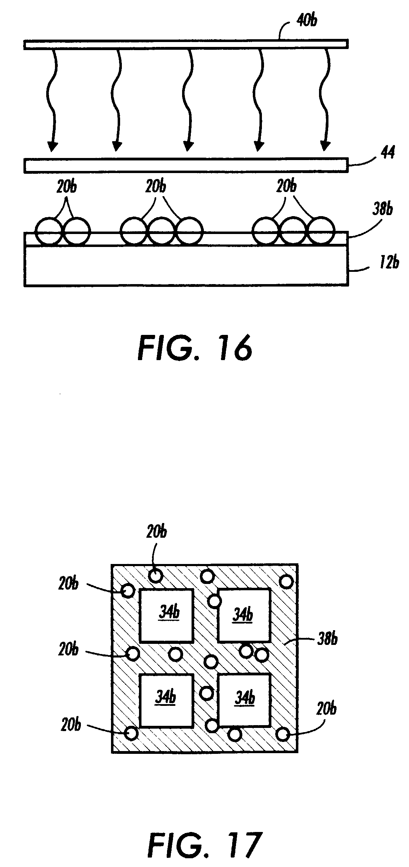

Turning now to Figure 14 a bottom substrate 12b of a liquid crystal display cell is shown. A four pixel arrangement is shown for illustrative purposes only; however, the actual number of pixels will be much greater. The bottom substrate 12b has active aperture areas 34b and non-active areas 36b. The bottom substrate 12b is then coated with a thin coating 38b of negative photoresist or negative UV curable polyimide as shown in Figures 15 and 16. The thickness of the thin coating 38b should be less than the diameter of the spacers 20 and preferably in the range of approximately 0.05 micrometers to 1 micrometer with best results obtained with a thickness of approximately 0.2 micrometers. If the thin coating 38b gets too thick it will cause filling problems and disturb the liquid crystal profile. The spacers 20b are then randomly dispersed on the thin coating 38b using a process such as the dry cloud method as is shown in Figures 15 and 16.

At this point, the thin coating 38b with the randomly dispersed spacers 20b should be set to prevent the spacers 20b from being easily separated from the thin coating 38b during subsequent handling and process steps using a method such as soft-temperature baking. The thickness of the thin coating 38b is also important to insure that the spacers 20b are rigidly secured to the bottom substrate 12b.

At this stage the bottom substrate 12b with the thin coating 38b and the spacers 20b should be illuminated with UV light source 40b through an aligned active area mask 44 to expose the thin coating 38b holding the spacers 20b. Because the thin coating 38b is a negative photoresist the aligned active area mask 44 should be constructed to block the UV light source 40b over the active aperture areas 34b and to allow the UV light source 40b to shine on the thin coating 38 covering the non-active areas 36b. Such masking techniques are known in the art. In contrast to the processes shown in Figures 6 through 13, the portions of the photoresist not receiving the UV light source 40b can easily be removed during a development step. Both negative photoresists and negative UV curable polyimides and their developing solutions are well known in the art and include the HRxxx series of products from Olin Microelectronic Materials, including HR100 and HR200.

The development step generally consists of immersion into a bath which removes the portions of the thin coating 38b which were not exposed by irradiating them with the UV light source 40b. After development of the bottom substrate 12b with the thin coating 38b and spacers 20b, the bottom substrate 12b will appear as shown in Figure 17. Notice that the portions of the thin coating 38b, and those spacers 20b adhered to them, that were not irradiated with the UV light source 40b and which were covering the active aperture areas 34b have been removed leaving the portions of the thin coating 38b and the spacers 20b which are adhered to them which were irradiated with the UV light source 40b and cover the non-active areas 36b.

At this point a polyimid alignment layer can be spin coated, cured, and rubbed as is known in the art, leaving the bottom substrate 12b ready for assembly into a liquid crystal display cell in any of the previously described methods. This process sequence can be modified as shown in Figure 10 to prepare the bottom substrate 12 initially with the polyimide alignment layer 42. The steps shown in Figures 15 and 16 would remain the same.

Up to this point a process flow has been generally described where the bottom substrate 12 with active aperture areas 34 and non-active areas 36 is first coated with an affixing agent, the spacers 20 are randomly dispersed on the affixing layer and then the affixing layer and the spacers are selectively removed from the active aperture areas 34 but left in the non-active areas 36.

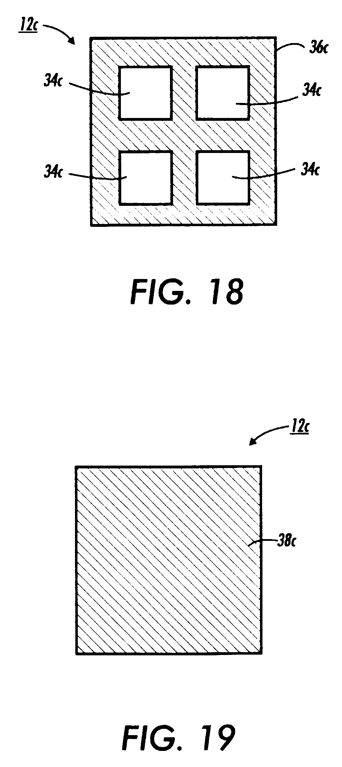

However, this is not the only order of process steps possible as the patterning of the affixing layer may be done before dispersing the spacers 20 onto the affixing layer as shown in Figures 18 to 22.

Figures 18 through 21 which show this alternate process and reference numerals with the extension "c" will be used to show elements that are identical to the elements shown in Figures 6 through 9.

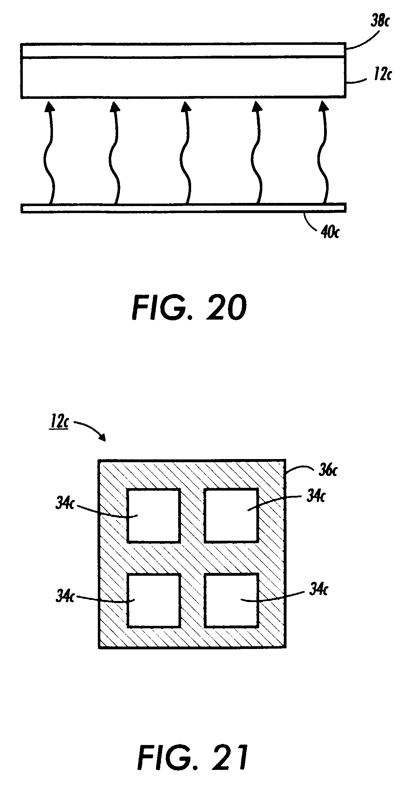

Turning now to Figure 18 a bottom substrate 12c of a liquid crystal display cell is shown. A four pixel arrangement is shown for illustrative purposes only; however, the actual number of pixels will be much greater. The bottom substrate 12c has a active aperture areas 34c and a non-active areas 36c. The bottom substrate 12c is then coated with an thin coating 38c of positive photoresist or positive UV curable polyimide as shown in Figures 19 and 20. In this process sequence the positive UV curable polyimide probably performs better than the positive photoresist. The thickness of the thin coating 38c should be less than the diameter of the spacers 20c and preferably in the range of approximately 0.05 micrometers to 1 micrometer with best results obtained with a thickness of approximately 0.2 micrometers. The thickness of the should be in the range of approximately 0.1 micrometers to 0.5 micrometers and should be at least 0.05 micrometers, but no more than 1 micrometer and preferably 0.2 micrometers. If the thin coating 38c gets too thick, it will cause filling problems and disturb the liquid crystal profile.

At this stage the bottom substrate 12c with the thin coating 38c should be back illuminated with UV light source 40c to allow the thin coating 38c to be exposed to the UV light source 40c. As shown in Figure 20, only the active aperture areas 34c will transmit the UV light source 40c; therefore, when the bottom substrate 12c with the thin coating 38C is back illuminated with the UV light source 40c, only those portions of the thin coating 38c will be exposed. As the thin coating 38c is a positive photoresist or positive UV curable polyimide, the portions of the thin coating 38c that are exposed can easily be removed during a development step.

The development step generally consists of immersion into a bath that removes the portions of the thin coating 38c that were irradiated with the UV light source 40c. After development of the bottom substrate 12c with the thin coating 38c, the bottom substrate 12c will appear as shown in Figure 21. Notice that the portions of the thin coating 38c that were irradiated with the UV light source 40c and which were covering the active aperture areas 34c have been removed leaving the portions of the thin coating 38c which were not irradiated with the UV light source 40c and cover the non-active areas 36c.

The spacers 20c are then randomly dispersed on the thin coating 38c using a process such as the dry cloud method.

At this point, the thin coating 38c with the randomly dispersed spacers 20c are set to prevent the spacers 20c from being easily separated from the thin coating 38c during subsequent handling and process steps using a method such as soft-temperature baking.

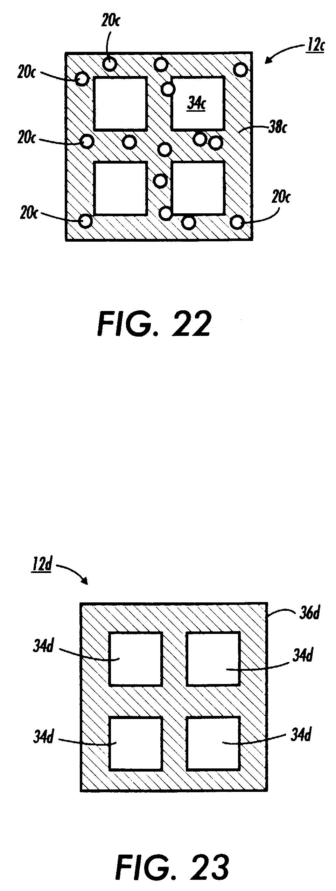

After the soft baking process step has been performed the bottom substrate 12c should be washed with a suitable solvent which will remove any spacers 20c not adhered to the thin coating 38c without damaging or removing the thin coating 38c with the spacers 20c adhered to it or damage any other portion of the bottom substrate 12c. One suitable wash is water. After being washed the bottom substrate 12c will appear as shown in Figure 22.

At this point a polyimid rubbed alignment layer can be spin coated, cured, and rubbed as is known in the art, leaving the bottom substrate 12c ready for assembly into a liquid crystal display cell in any of the previously described methods. This process sequence can be modified as shown in Figure 10 to prepare the bottom substrate 12c initially with the polyimide alignment layer 42. The steps shown in Figures 19 through 22 would remain the same.

It should also be noted that although this process describes using a positive photoresist, the process could be modified to use a negative photoresist and an aligned active area mask 44. Figures 23 through 27 show this alternate process and reference numerals with the extension "d" will be used to show elements that are identical to the elements shown in earlier figures.

Turning now to Figure 18 a bottom substrate 12d of a liquid crystal display cell is shown. A four pixel arrangement is shown for illustrative purposes only; however, the actual number of pixels will be much greater. The bottom substrate 12d has a active aperture areas 34d and a non-active areas 36d. The bottom substrate 12d is then coated with an thin coating 38d of negative photoresist or negative UV curable polyimide as shown in Figures 19 and 20. In this process sequence the negative UV curable polyimide probably performs better than the negative photoresist. The thickness of the thin coating 38d should be less than the diameter of the spacers 20d and preferably in the range of approximately 0.05 micrometers to 1 micrometer with best results obtained with a thickness of approximately 0.2 micrometers. The thickness of the should be in the range of approximately 0.1 micrometers to 0.5 micrometers and should be at least 0.05 micrometers, but no more than 1 micrometer and preferably 0.2 micrometers. If the thin coating 38d gets too thick it will cause filling problems and disturb the liquid crystal profile.

At this stage the bottom substrate 12d with the thin coating 38d should be illuminated with UV light source 40d through an aligned active area mask 44d to expose the thin coating 38d. Because the thin coating 38d is a negative photoresist the aligned active area mask 44d should be constructed to block the UV light source 40d over the active aperture areas 34d and to allow the UV light source 40d to shine on the thin coating 38d covering the non-active areas 36d. Such masking techniques are known in the art. The portions of the photoresist not receiving the UV light source 40d can easily be removed during a development step.

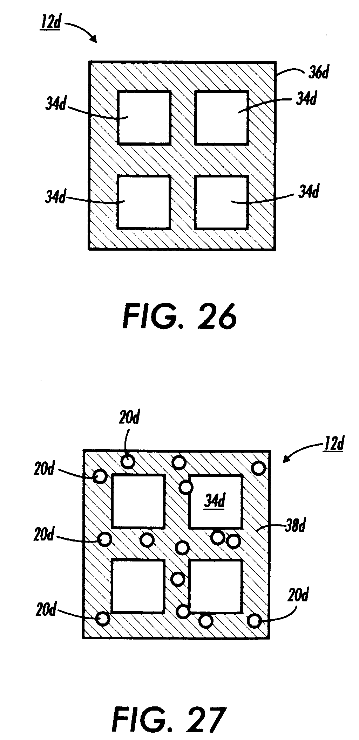

The development step generally consists of immersion into a bath that removes the portions of the thin coating 38d that were not exposed by irradiating them with the UV light source 40d. After development of the bottom substrate 12d with the thin coating 38b, the bottom substrate 12d will appear as shown in Figure 26. Notice that the portions of the thin coating 38d that were not irradiated with the UV light source 40d and which were covering the active aperture areas 34d have been removed leaving the portions of the thin coating 38d which were irradiated with the UV light source 40d and cover the non-active areas 36b.

The spacers 20d are then randomly dispersed on the thin coating 38d using a process such as the dry cloud method.

At this point, the thin coating 38d with the randomly dispersed spacers 20d are set to prevent the spacers 20d from being easily separated from the thin coating 38d during subsequent handling and process steps using a method such as soft-temperature baking.

After the soft baking process step has been performed the bottom substrate 12d should be washed with a suitable solvent which will remove any spacers 20d not adhered to the thin coating 38d without damaging or removing the thin coating 38d with the spacers 20d adhered to it or damage any other portion of the bottom substrate 12d. One suitable wash is water. After being washed the bottom substrate 12d will appear as shown in Figure 27.

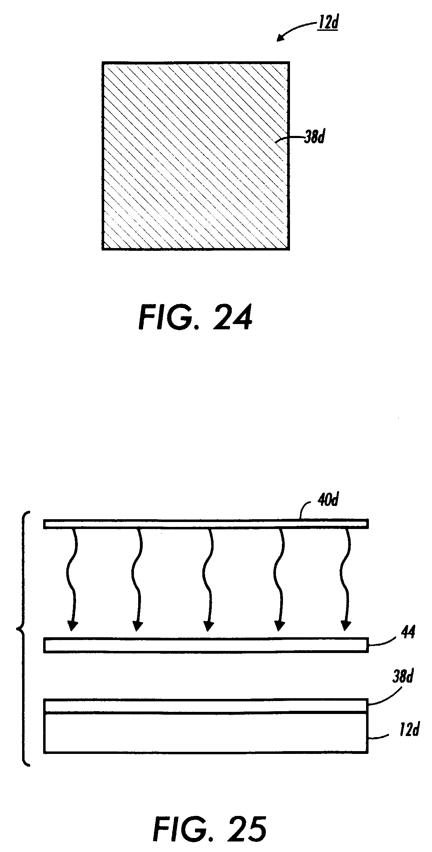

At this point a polyimid rubbed alignment layer can be spin coated, cured, and rubbed as is known in the art, leaving the bottom substrate 12d ready for assembly into a liquid crystal display cell in any of the previously described methods. This process sequence can be modified as shown in Figure 10 to prepare the bottom substrate 12d initially with the polyimide alignment layer 42. The steps shown in Figures 24 through 27 would remain the same.

## Claims

1. A display cell comprising:
a) two substrates (12,14) with at least one of said substrates (12) divided into active aperture areas (34) and non-active areas (36);
b) a spacing layer, interposed between said two substrates (12,14), comprised of an affixing layer (38) and spacing elements (20), wherein the affixing layer (38) covers at least a portion of the non-active areas (36) and remains substantially outside of the active aperture areas (34), and the spacing elements (20) are attached to the affixing layer (38) and protrude therefrom; and
c) said two substrates (12,14) being affixed to each other but remaining substantially uniformly separated from each other by said spacing elements (20).

2. The display cell of claim 1 wherein the display cell is a liquid crystal display cell and further comprises a liquid crystal layer interposed between said two substrates (12,14).

3. The display cell of either of claims 1 or 2 wherein the affixing layer (38) comprises a photoresist selected from the group consisting of a negative photoresist and a positive photoresist.

4. The display cell of claims 1 or 2 wherein the affixing layer (38) comprises a curable polyimide selected from the group consisting of a negative UV curable polyimide and a positive UV curable polyimide.

5. The display cell of any of claims 1 to 4 wherein the spacing elements (20) are substantially spherical.

6. The display cell of any of claims 1 to 4 wherein the spacing elements (20) are substantially polyhedral.

7. The display cell of claim 1 wherein the spacing elements (20) are formed from a material selected from the group consisting of glass, plastic and ceramic.

8. The display cell of any of claims 1 to 7 wherein the affixing layer (38) has a thickness of from 0.05 micrometers to 1 micrometer.

9. The process of forming a display cell comprising:
a) providing a first substrate (12) which has been partitioned in active areas (34) and inactive areas (36) and has a front surface and a rear surface;
b) forming an affixing layer (38) on the front surface of said first substrate (12);
c) randomly attaching spacing elements (20) to said affixing layer (38);
d) removing said affixing layer (38) and said spacing elements (20) attached to said affixing layer (38) from substantially all of said active areas (36); and
e) attaching a second substrate (14) to said first substrate (12) on the front surface, said second substrate (14) being kept at a substantially uniform distance from said first substrate by said spacing elements (20).

10. The process of forming a display cell of claim 9 wherein the display cell is a liquid crystal display cell and further comprises providing a liquid crystal layer interposed between said first (12) and second (14) substrates.
